# EUROPEAN PATENT SPECIFICATION

(11) **EP 3 263 620 B1**
(45) Date of publication and mention of the grant of the patent: **13.03.2019**
(21) Application number: 16177333.8
(22) Date of filing: 30.06.2016
(51) Int. Cl.: C08G 18/76, C08G 18/48, C08G 18/66, C08K 3/34, C08G 18/10, C08G 18/24, C08G 18/36, E01C 13/06, C08G 101/00

(54) **PU FLOORING PRODUCTION FOR A SPORTS FIELD**
PU-FUSSBODEN-HERSTELLUNG FÜR EINE SPORTFELD
PRODUCTION DE REVÊTEMENT DE SOL DE PU POUR TERRAIN DE SPORT

(43) Date of publication of application: 03.01.2018
(73) Proprietor: Polytex Sportbeläge Produktions-GmbH, 47929 Grefrath (DE)
(72) Inventor: SICK, Stephan, 47877 Willich (DE); FINDER, Zdenka, 86701 Rohrenfels (DE)
(74) Representative: Richardt Patentanwälte PartG mbB

(56) References cited:
- DE-A1-102008 054 962
- JP-A- H1 181 210
- US-A- 5 558 917
- US-A- 5 596 063

## Description

### Field of the invention

The invention relates to a method and system for producing a polyurethane flooring, especially a polyurethane sports flooring.

### Background and related art

Japanese patent application with application number 09248510 (KOBAYASHI KENJI) describes the provision of an elastic paving material that has desired cushion properties and elasticity for providing an elastic pavement. A material is disclosed containing a soft foaming body chip in a foaming polyurethane resin composed mostly of closed cells and having an expansion ratio of 1.05 to 2.0 times and a density of 0.6 to 1.2 g/cm3. This material is applied on a bedrock to form a lower layer. The foaming polyurethane resin is obtained when an inactive gas is mechanically and uniformly mixed and dispersed, in the presence of a silicone foam adjusting agent, into the mixture of a main agent composed mainly of an urethane prepolymer having an isocyanate group at its terminal and a hardening agent comprising an active hydrogen compound, an inorganic filler, a catalyst, and other assistants.

The German patent application DE 102008054962 A1 relates to a process for the production of elastic laminates, in which a polyurethane binder containing a prepolymer containing isocyanate groups is mixed with a granulate of a cellular polyurethane elastomer and optionally further plastic granules and an excess of water. Thereby, at least 20% by weight of water, based on the weight of prepolymer containing isocyanate groups, is added to the polymer mixture.

US patent US005558917A relates to a polyisocyanate based on polymethylene poly(phenylisocyanate) and to a process for the production of a polyurethane backing on a substrate using this polyisocyanate to produce the polyurethane backing. The polyisocyanate has a functionality of less than about 2.4, an isocyanate group content of 25 to 30%, and a urethane content of from about 2 to 6%, and comprises polymethylene poly(phenylisocyanate) from about 5 to 25% of 4,4'-methylene bis(phenyloisocyanate), and from about 20 to 50% of 2,2'- and 2,4'-methylene bis(phenyl-isocyanate).

US patent US005596063A relates to a process for the preparation of CFC-free, flexible polyurethane foams or molded foams by reacting A) liquid polyisocyanate mixtures containing bonded urethane groups and having a content of NCO groups of from 20 to 30% by weight, B) relatively high-molecular-weight polyhydroxyl compounds.

Floorings for sport grounds, for example for an athletic track or safety playground, are commonly made of polyurethane.

Floorings for sport grounds are typically installed by unrolling a pre-fabricated PU roll mat at its destination and gluing the PU mat down to the floor with a polyurethane adhesive. The production of the PU mat within a manufacturing plant may comprise performing a chemical reaction that quickly, typically within minutes, generates a foamed, solid PU layer. The pre-fabricated PU roll is produced in a sport ground factory and is transported - potentially via long distances - to the sport area where it shall be installed. After the PU roll mat is rolled out, the edges of the lanes need to be connected with each other and need to be sealed to prevent the forming of open crevices between the lanes.

### Summary

It is an objective of the present invention to provide for an improved method and system for producing a polyurethane (PU) flooring for a sports field as specified in the independent claims. Embodiments of the invention are given in the dependent claims. Embodiments of the present invention can be freely combined with each other if they are not mutually exclusive.

In one aspect, the invention relates to a method for producing a polyurethane flooring for a sports field. The method comprises:
- providing reactive components for producing polyurethane, the reactive components comprising an A component being a polyol mixture and a B component being an isocyanate mixture and water, the B component comprising:
   ∘ 2,2' Methylendiphenyldiisocyanate;
   ∘ diphenylmethane-2,4'-diisocyanate;
   ∘ diphenylmethane-4,4'-diisocyanate; and
   ∘ isocyanate prepolymer;
- mixing the reactive components for generating a liquid polyurethane reaction mixture; thereby, chemical reactions are triggered that will slowly generate polyurethane and CO2 gas, whereby the CO2 gas causes the reaction mixture and the polyurethane polymers contained therein to foam;
- applying the polyurethane reaction mixture to a ground of the sports field before chemical reactions in the reaction mixture have generated a solid polyurethane foam, the polyurethane foam after its solidification to be used as the polyurethane flooring.

Said features may be beneficial for multiple reasons: using water as a further reactive component allows generating an in-situ PU foam from a slowly reacting PU reaction mixture that can be directly applied on the ground of the sports field. Thus, the costs associated with transporting pre-fabricated PU roll to the place of destination can be avoided or at least reduced. Water is abundantly available and the other two reactive components consume less volume per weight unit than a pre-fabricated, foamed PU roll. Thus, transportation and handling costs are reduced.

Moreover, the reaction of the reactive components generates the PU and, at the same time, CO2 in sufficient amount to act as a foam blowing agent for generating the foam. Using a B component with a specific mixture of MDI monomers (comprising a combination of 2,2' Methylendiphenyldiisocyanate, diphenylmethane-2,4'-diisocyanate and diphenylmethane-4,4'-diisocyanate) and an isocyanate prepolymer generated from said monomers may have the advantage that said specific reaction mixture has been observed to react with the A component and the water comparatively slowly. It is assumed - without being bound to any particular theory - that sterical properties of the MDI monomers, in particular the 2,2' Methylendiphenyldiisocyanate, reduce the reaction speed with the OH groups of the A component. Thus, the process of PU polymer generation is retarded, leaving the competing reaction between water and the ingredients of the B component enough time to generate CO2 bubbles which blow the reaction mixture for creating a PU foam instead of a non-foamed PU mass.

Typically, the reaction of the reactive components and thus, the foam generation, begins in a reaction tank upon mixing the reactive components in said tank and continues after the PU reaction mixture was applied on the ground for several minutes or even several hours. The amount of water and/or the amount and type of catalysts or other substances is chosen thus that the speed of foam generation corresponds to the speed of the chemical reaction that forms the PU. This means that CO2 is generated at least until the majority of the educts that could react to generate the PU foam have in fact been transformed into the PU foam. This may ensure that the foam has been transformed into a solid PU foam before it collapses due to a reduced amount of CO2 bubbles acting as a foam blowing agent.

Typically, the reaction mixture is applied to the ground within 15 minutes, preferentially within one minute, after its generation. Although foam generation starts immediately and the reaction mixture already comprises some CO2 bubbles when applied to the ground, the reaction mixture at this moment in time is still best characterized as a (viscous) liquid. While the chemical reactions for generating the CO2 gas and the PU polymers continue, the PU liquid having been applied on the ground becomes more and more viscous and finally transforms into a solid foam phase.

In a further beneficial aspect, the PU reaction mixture can be applied to the ground directly without the necessity to add an additional adhesive layer between the PU layer and the ground. This is because the in-situ generated foam is at least right after its application on the floor sufficiently liquid to penetrate into small cracks of the ground, thereby mechanically fixing the PU floor when the PU has completely solidified.

In a further beneficial aspect, no additional leveling layer between the ground and the flooring layer is necessary to compensate for surface irregularities of the ground. This is because the applied PU reaction mix and the resulting PU foam will fill depressions and indentations of the ground and will equalize when applied to a sufficient amount on the ground.

In a further beneficial aspect, no additional step for sealing or connecting edges of adjacent lanes is necessary as multiple adjacent lanes may simply be applied on the floor before the foam has solidified. In this case, the non-solidified foam of the adjacent lanes will automatically unify to form a connected, seamless sport floor. The automated connection of adjacent PU mixture or PU foam lanes reliably protects against the generation of cracks at adjacent edges of two lanes which could allow water to penetrate and damage the floor.

Combining a B component comprising a "reaction-retarded" MDI mixture and a corresponding prepolymer with water as a further reactive component allows that two competing reactions (a "blowing reaction" generating CO2 bubbles and a "gellation reaction" generating the PU polymer) are slowly executed in parallel, whereby the CO2 gas generation is sufficient to blow the polyurethane or at least prevent the collapse of the PU at least as long as the gellation reaction continues.

Thus, embodiments of the invention may allow generating PU floorings for sports ground in a quicker, less labor intensive manner. Embodiments of the invention may allow generating huge, seamless sport floors that automatically compensate for surface irregularities in the ground, firmly attach to the ground without any adhesive layer.

Contrary to non-foamed floors, embodiments of the invention may allow producing floors for sport fields which are cushioning and elastic.

Non-foamed floors have been observed to get hard and brittle in particular at low temperatures. Embodiments of the invention allow providing a foamed PU-based sports field that cushions any force applied on the ground by more than 35%. Thus, a force of 100 Newton applied on the floor is cushioned to a force of 65 Newton by the PU-based, in-situ foamed sports field according to embodiments of the invention.

The mixture of the reactive components which in addition may comprise one or more additives such as catalysts, pigments, fillers, etc, is also referred to as reaction mixture. As the foaming and PU generation process starts immediately upon generation of the reaction mixture, this reaction mixture can also be referred to as (liquid) "PU foam" although the majority of the educts in the reaction mixture may not have reacted into PU or CO2 yet.

In a further beneficial aspect, no machines for mechanically foaming a PU-reaction mixture are required as the PU formation according to embodiments of the invention is based on adding water to the reaction mixture. This may be beneficial as machines for mechanically foaming PU are expensive and/or may often not be available.

In a further beneficial aspect, the method according to embodiments of the invention has been observed to be applicable in a wide temperature range, in particular in a range of 5°C - 40°C, and thus can be used for generating PU floorings for outdoor sport fields in many different climate zones and in a wide temperature range. Thus, this method is particularly suited for generating PU-based flooring for outdoor sport fields. In comparison, state of the art, factory-plant based approaches for generating PU-based foamed sport field floorings are based on a comparatively narrow and high temperature range. Typically, PU foam generated in a factory (with a reaction mixture that lacks water) has completed the foaming process with 6 minutes at 180°C cushioning temperature. To the contrary, the foam generated according to embodiments of the invention solidifies not earlier than 30 minutes, or even not before one to several hours and is "cured" ("completely hardened") after about some days or even one week. Thus, embodiments of the invention use a "reaction-retarded" reaction mixture for generating foamed PU.

According to embodiments, the amount of the water and the amount of the 2,2' methylenediisocyanate is chosen such that one hour after the mixing of the reactive components, more than 60% of the water has reacted to CO2 and more than 50% of the NCO groups of component B have reacted with hydroxyl groups of the polyol of the component B into the solid polyurethane foam. Typically, the generation of the solid PU foam may be completed not before 30 minutes after mixing the reactive components together. Thus, the reaction speed of the specific reaction mixture is retarded and allows applying multiple lanes of a PU reaction mixture in situ that will automatically solidify in a time interval that allows applying multiple parallel lanes while the reaction mixture is still liquid.

The appropriate amount of 2,2' methylenediisocyanate and water can easily be determined by performing some preliminary tests with various amounts of 2,2' methylenediisocyanate in the B component and the premix used for creating the B component and various amounts of water in the range of 0,1-1,5 % by weight of the A component, in particular 0,4-0,6 % by weight of the A component.

The 2,2' methylenediisocyanate monomer and a prepolymer in the B component created from the above specified mixture of MDI monomers has been observed to have a strong impact on the reaction velocity of the PU reaction mixture. The optimum amount of said monomer and of the water may depend on the particularities of the type of polymer of the A component, of the particularities and amounts of other MDI monomers and the premix-polymer, if any. The amount of water will typically be in the above specified range and the optimum amount of 2,2' methylenediisocyanate may easily be determined by using a particular amount of water, e.g. 0,5% of the A component and then testing the reaction velocity for various amounts of the 2,2' methylenediisocyanate.

According to embodiments, the water is added to the reaction mixture as a compound of the A component.

According to embodiments, the water is added in an amount of 0,1% - 1,5% by weight of the A component, more preferentially in an amount of 0,4 to 0,6 % by weight of the A component, e.g. 0,5 % by weight of the A component. 0,5 % of the A component typically correspond to 0,2 % to 0,3 % of the total reaction mixture. This may be advantageous as said amount of water will be able to generate a sufficient amount of CO2 gas to blow up the PU reaction mixture into a PU foam before the PU solidifies. Thus, a highly elastic PU foam may be generated.

Typically, the A component comprises the polyol and a plurality of other substances, e.g. additives, which typically do not contribute more than a few percent to the total A component. As the polyol and the water do not react with each other, they can be provided as a polyol-water mixture in a single container. Using an A component that already comprises water may ease the handling of the reaction educts and may ease the creation of the reaction mixture. Alternatively, the water and the A component are respectively provided in a separate container, e.g. separate boxes or bottles, and are added, together with the B component, to a reaction tank for providing the mixture of the reactive components. In some examples, the container comprising the B component or the A component is used as a reaction tank.

According to embodiments, the water is added to the reaction mixture and/or to the A component in a free, non-zeolitbound form. Thus, a manufacturer of the A component or a company that adapts a standard A component to the requirements of artificial turf industry may add water in the above specified amount range to the A component. This may ease the handling at the sport fields site because only two reaction components, the A component and the B component have to be mixed with each other. The A component may already comprise an appropriate amount of water (which will not react with the polyol of the A component but will react with the isocyanate groups of the monomers, MDI-polymers and of the prepolymer of the B component). Thus, the handling of the reaction components at the sports facility may greatly be facilitated.

According to embodiments, the method comprises adding a molecular sieve material to the A component to adsorb and remove any moisture from the A component. For example, the molecular sieve material can be a 3 Å molecular sieve material.

According to some embodiments, the molecular sieve material is a zeolite of a first type, e.g. a zeolite adapted to absorb large amounts of water quickly and adapted to desorb the water only very slowly. For example, the first zeolite can be a sodium aluminosilicate, e.g.: Na₁₂Al₁₂Si₁₂O₄₈·27H₂O, zeolite A, Na₁₆Al₁₆Si₃2O₉₆·16H₂O, Na₁₂Al₁₂Si₁₂O₄₈·q H2O, Na₃₈₄Al₃₈₄Si₃₈₄O₁₅₃₆·518H₂O.

Optionally, if the water is added to the reaction mixture as an ingredient of the A component, the water is added after the moisture was removed from the A component. Removing the moisture from the A component may be beneficial as it ensures that the water that is later added to the A component or to the reaction mixture as a further reaction component for producing the CO2 gas is present in the reaction mixture exactly in the specified amount. The amount of water may be critical, because if the amount of water would be too high, many CNO groups would react into CO2 gas without forming PU, thereby resulting in a PU foam whose resilience and mechanical durability is limited. If the amount of water would be too low, the amount of CO2 gas generated would not suffice to generate an elastic PU foam.

According to some examples, the molecular sieve material is removed from the A component before a defined amount of water is (intentionally) added to the A component or the reaction mixture. This may ensure that the molecular sieve material does not absorb the water that is deliberately added to the component A or to the reaction mixture to generate the CO2 foam. Alternatively, the molecular sieve material is added to the A component exactly up to an amount where it is completely soaked with the moisture contained in the A component. For example, the state of a molecular sieve material may easily be identified by a color change of the molecular sieve material upon having absorbed water up to the capacity of the molecular sieve material and the adding of the molecular sieve material to the A component may be stopped immediately after having observed that newly added molecular sieve material keeps its color as all moisture in the A component has already been absorbed. According to other examples, the amount of molecular sieve material that needs to be added to absorb the moisture in the ingredients of the A component is determined empirically and/or heuristically. For example, the A component may comprise a particular plant oil as extender, a particular polyol and a particular filling material and the amount of molecular sieve material that is able to completely absorb the moisture in said ingredients of the A component may be determined heuristically and/or empirically. For example, in case a particular type of A component typically comprises 0,4% of water as moisture, a first zeolite may be added to the A component in an amount of 1% by weight of the A component, the first zeolite being able to absorb water in an amount of up to 40% of its own weight.

According to embodiments, the B component comprises a mixture of monomers and polymers respectively comprising one or more NCO groups. The polyol of the A component comprises one or more OH groups. The NCO groups in the B component and the OH groups in the A component (without the water) have an NCO/OH molar ratio in the range of 1.14:1 to 1.18:1, e.g. in the range of 1.15:1 to 1.17:1. This ratio may help to ensure that an appropriate amount of NCO groups can react with the water to generate the CO2 as a foaming agent and an appropriate amount of NCO groups can react with the polyol of the A component to generate the PU polymer. For example, the totality of MDI monomers, the MDI polymer and the prepolymer in the B component and the polyol in the A component may have an NCO/OH molar ratio of 1.16:1. This means that in the reaction mixture there are 116 NCO groups (provided by the B component) per 100 OH groups (provided by the polyol of the A component lacking any water). This means that the surplus 16 NCO groups can react with the water to form CO2 gas bubbles acting as the foam blowing agent. Thus, the OH groups of the water and of the polyol "compete" for the NCO groups of the B component, and CO2 is generated until there is either no more water that can be released from a zeolite or until there is no more isocyanate in the reaction mixture.

According to embodiments, the method further comprises adding a catalyst for catalyzing a polyaddition reaction of the A component and the B component. The catalyst is added to the reaction mixture in an amount that catalyzes the generation of the solid polyurethane foam at a speed that prevents the generation of the solid polyurethane foam before at least 30 minutes has lapsed since the generation of the reaction mixture. Typically, this amount of the catalyst is about half of the amount of said catalyst that is used for generating PU foam mats in an artificial turf manufacturing plant. This may be further ensure that the generation of the PU polymers is retarded and a PU foam is generated rather than an un-foamed PU mass.

For example, the catalyst for the polyaddition reaction can be di-n-octyltin neodecanoate in an amount of 0,0008 % to 0.0011% by weight of a combination of the A component and the water, e.g. 0,001 % by weight of the A component and the water. The catalyst may be an ingredient of the A component or added separately when generating the reaction mixture. Alternatively, the catalyst may be di-butyl-tin-dilaureat or an amine catalyst, in particular a tertiary amine catalyst. Examples of amine catalysts are PolyCat DBU and PolyCat 4. Preferentially, the amine catalyst is added to an amount equal to or less than half of the amount of amine catalyst used for generating PU for artificial turf in a manufacturing plant, whereby the specific amount of the catalyst may depend from the respective type of catalyst used.

Using the catalyst(s) in the above specified amount ranges for controlling the speed of the gellation reaction may be advantageous as the catalyst ensures that the chemical reaction for generating the PU foam will terminate within several hours, e.g. six hours after having applied the PU reaction mixture on the ground, but will typically not terminate within the first 10 minutes after applying the mixture on the ground. Thus, the reaction speed of generating PU by connecting NCO groups of molecules of the B component with OH groups of the polyol is controlled to ensure that the PU polymer is neither generated too fast (too fast means: at a speed that would cause the flooring to be less elastic because the majority of the water is still absorbed by a zeolite and when the PU is generated and solidified, thereby causing the not yet solidified PU to collapse as the small amount of CO2 generated at that early state is not enough to generate a PU foam) nor too slow (too slow means: at a speed that would cause the flooring to be less elastic because the PU may solidify in a late state when the majority of the water has already reacted into CO2 bubbles that have left the reaction mixture when the PU foam solidifies).

According to embodiments, the method further comprises adding a second zeolite to the reaction mixture. The second zeolite is soaked with further water and is adapted to desorb at least 20% of the further water to the reaction mixture within 60 minutes after creation of the reaction mixture. The combination of a first and a second zeolite and a defined amount of water added in free form to the reaction mixture may ensure that the amount of water that is added can be determined and controlled highly accurately, resulting in a high reproducibility of the properties, in particular the elasticity, of the resulting PU foam.

Adding a second zeolite that slowly releases water into the reaction mixture may be particularly advantageous in case of high ambient temperatures an additional amount of water is provided that slowly but continuously reacts with the isocyanates to generate CO2 bubbles acting as foaming agent. By choosing the appropriate amount and type of second zeolite, the CO2 production can be boosted to counteract the decreased viscosity and increased PU polymerization speed for multiple hours. While the first zeolite that may be used for drying the reactive components may be a zeolite that strongly absorbs water and that releases water only very slowly or not at all, the second zeolite is typically a zeolite that continuously desorbs a significant portion of its bound water, e.g. 20% or more, within 30 to 60 minutes after having been added to the reaction mixture.

According to embodiments, the method further comprises acquiring a temperature of the ground of the sports field. For example, the apparatus or vehicle used for applying the liquid PU reaction mixture on the sports ground may comprise a thermometer or may comprise a data processing unit connected to the internet and being configured for retrieving current temperature data for the sports field from a weather service. The apparatus or device may comprise, for example, a GPS module allowing the apparatus or device to automatically determine the current location of the apparatus or device and to retrieve current weather data for the sports field from one or more weather services via the internet. The amount of the second zeolite depends on the measured ambient temperature. The higher the temperature, the higher the amount of the second zeolite with its adsorbed further water that is added to the reaction mixture. An appropriate amount can be determined for each specific combination of an A component and a B component experimentally, e.g. in some preparatory text runs under different temperatures.

This may be advantageous as said features may allow adopting the method to very hot areas, e.g. Dubai or other states having similar climatic conditions. Typically, the method as described herein can be applied on a very wide temperature area. However, in case the temperature of the ground and the ambient temperature is very high, two effects occur which may - if not compensated by appropriate countermeasures - result in the generation of a PU foam with low elasticity (not enough CO2 bubbles were present during solidification). One effect is that with growing temperature, the PU reaction mixture is less viscous. Thus, the CO2 bubbles reach the surface of the PU reaction mix much faster and have a shorter resting time within the PU reaction mixture and thus also have a shorter time to act as blowing agent. In a second aspect, the speed of the addition reaction between the polyol in the A component and the isocyanate molecules in the B component increases with an increase of the temperature of the reaction mix.

Thus, as a consequence of a high ambient temperature, the majority of PU polymers may have formed before a sufficient amount of CO2 gas could be generated that rests in the reaction mixtures long enough to allow for the creation of a flexible solid foam. By adding additional, further water that is continuously released by the zeolite, said two accelerating effects on the reaction can be compensated: the water is released slowly and continuously, thereby ensuring that throughout the generation of the PU polymer a sufficient amount of CO2 gas is generated in the mixture. The type and amount of the second zeolite is chosen such that the zeolite continues releasing water at least as long as the chemical reaction that generates urethane linkages continues. For example, the second zeolite can be a hydrated Clinoptilolite zeolite, a potassium aluminosilicate, a calcium aluminosilicate, a sodium aluminosilicate, etc. Preferably, the second zeolite has a high water absorption capacity and/or a fast water desorption rate.

According to some examples, the method further comprises acquiring a current temperature at a current time and a future temperature at a future time of the ground of the sports field. For example, the current time could be measured by a thermometer of the vehicle or apparatus that applies the PU reaction mixture and/or could be retrieved from a weather service via the internet and a network interface of said vehicle or apparatus. Likewise, the future temperature could be retrieved from said weather service by sending current location information, e.g. GPS data, from the apparatus or vehicle to the internet service. The future time for which the future temperature is predicted and received is typically in the range of 2-24 hours later than the current time. Selectively in case the current and the future temperature are in a range of 5°C to 40°C, the reaction mixture as described herein without adding any further zeolite bound water may be applied. However in case the current temperature or future temperature exceeds 30°C, adding the second zeolite with the further water to the reaction mixture may be beneficial and help to ensure that a sufficient amount of CO2 is generated during the polyaddition reaction. At least in case the current or future temperature exceeds or is predicted to exceed 40°C, the second zeolite that is soaked with water to its capacity is added to the reaction mixture to increase the amount of CO2 gas generated.

According to embodiments, the method comprises generating the B component by:
- creating an MDI premix comprising:
   ∘ 2,2' Methylendiphenyldiisocyanate in an amount of 0,3%-7% by weight of the MDI premix;
   ∘ diphenylmethane-2,4'-diisocyanate in an amount of 10%-35% by weight of the MDI premix;
   ∘ diphenylmethane-4,4'-diisocyanate in an amount of 10%-45% by weight of the premix; and
   ∘ MDI-polymers consisting of two or more of said diisocyanate monomers in an amount of 0%-30% by weight of the MDI premix;
- mixing the MDI premix 940 and a premix polyol for letting the MDI premix components and the premix polyol generate the B component, the B component comprising:
   ∘ an aromatic isocyanate prepolymer; and
   ∘ unreacted educts of the premix and the premix polyol.

Then, the components of the B component premix are allowed to react with each other (which may typically achieved already at room temperature and/or in accordance with standard techniques known in PU polymer chemistry to generate prepolymers of the B component) to generate the B component. The resulting B component comprises an aromatic isocyanate prepolymer generated from the educts in the MDI premix and the premix polyol. The prepolymer is generated in an amount of 54 - 70 % by weight of the B component and unreacted educts of the premix and of the premix polyol in an amount of 30 - 46 % by weight of the B component. The relative amounts of the MDI monomers (2,2' Methylendiphenyldiisocyanate, diphenylmethane-2,4'-diisocyanate and diphenylmethane-4,4'-diisocyanate) typically does not change significantly during this reaction. Some of the monomers react with each other to form an "MDI polymer" which may also be contained in the MDI premix. The monomers and the MDI polymer will react with the premix polymer, e.g. a polyether polyol to form the prepolymer, also referred herein as premix product, which is an ingredient of the B component.

The premix polyol, i.e., the polyol used for generating the prepolymer, can be the same type of polyol as the polyol of the A component. However, it is possible that a different polyol are used which preferentially have a similar molecular weight. For example, the premix polyol can be a polyether polyol and the polyol of the A component can be a polyethylene.

The above given amount ranges have been observed as being particularly suited for generating an in-situ PU foam over a broad temperature range of 5°C to 40°C in a controlled and reaction-retarded manner.

According to embodiments, the NCO content of the B component being between 1.5% and 18% by weight of the B component, in particular between 9% and 14%, e.g. 10% by weight of the B component.

According to embodiments, the MDI premix comprises a mixture of isocyanate monomers and optionally the MDI polymer and is used, for generating the isocyanate prepolymer. The MDI premix comprises the 2,2' Methylendiphenyldiisocyanate in an amount of 1,0 to 7 % by weight of the MDI premix. This particular amount of the 2,2' Methylendiphenyldiisocyanate has been observed to be particularly effective in retarding the reaction speed of the PU polymerization.

According to embodiments, the NCO content of the B component is the weight ratio of unreacted MDI monomers (2,2' Methylendiphenyldiisocyanate, diphenylmethane-2,4'-diisocyanate and diphenylmethane-4,4'-diisocyanate) and the MDI polymer to the total weight of the B component, i.e., a measure of the isocyanate content of the B compound that can be used for generating PU.

Using a B component whose prepolymer has the above specified NCO content and/or which comprises the above specified amount of 2,2' MDI monomer is particularly advantageous as this combination results in a retardation of the generation of the foamed PU that allows to apply the reaction mixture on the ground without risking an immediate explosion of the reaction mixture and without a volume expansion of the reaction mixture that would prevent the controlled application of the reaction mixture to the ground.

According to embodiments, the B component comprises an isomeric mixture of the three above mentioned MDI monomers, an MDI based polymer, a premix polymer (said four compounds are also referred to as "B component educts") and a NCO terminal prepolymer generated from two or more of said four components ("products"). About 40% by weight of the resulting B component may comprise said four unreacted educts and about 60% of the B component may consist of a reaction product of said educts in the form of a prepolymer.

The expression "substance mixture M having an NCO content of Z %" as used herein refers to the function "Z= (weight of unreacted NCO-monomers and MDI polymer x 100%)/ total weight of the substance mixture M.

Polyurethane prepolymers are formed by combining an excess of diisocyanate monomers with a premix polyol. One of the NCO groups of the diisocyanate monomers reacts with one of the OH groups of the premix polyol. The other end of the polyol reacts with another diisocyanate. The resulting prepolymer has an isocyanate group on both ends. The prepolymer is a diisocyanate itself, and it reacts like a diisocyanate but with several important differences. When compared with the original diisocyanate, the prepolymer has a greater molecular weight, a higher viscosity, a lower isocyanate content by weight (%NCO), and a lower vapor pressure. Prepolymers can be made under controlled conditions in a manufacturing plant. A dry nitrogen atmosphere protects isocyanates from atmospheric moisture and protects polyols from oxidation.

The above mentioned isomeric MDI monomer mixture and the relative amounts of polyol-OH groups and NCO groups of the monomers that react into a prepolymer having the above mentioned NCO content may be advantageous as these factors result in a comparatively high viscosity of the prepolymer. The high viscosity and the steric properties of the prepolymer result in a retardation of the PU foam generation that allows adding water to the reaction mixture without triggering an immediate, significant volume expansion or explosion by the generated water. In a further beneficial aspect, the increased viscosity of the prepolymer that is part of the B component may be able to slow down the escaping of the gas bubbles from the reaction mixture. Typically, a catalyst is not used in prepolymer reactions. The prepolymer may be generated by stirring and heating the above mentioned MDI monomer mixture to approximately 60°C. The polyol is then added at a slow rate to keep the MDI mixture liquid and control the exotherm. The progress of the reaction can be monitored by periodic measurements of %NCO and viscosity. The amount of isocyanate and polyol needed to form a prepolymer with a given %NCO may be computed from the polyol equivalent weight X, the isocyanate equivalent weight Y and N as the desired % NCO of the prepolymer (as a fraction). If 1 equivalent each of the premix polyol and isocyanate (provided in the form of MDI monomers) is mixed, a 0 %NCO prepolymer will result. By increasing the relative amount of MDI monomers relative to the polyol, a %NCO that is larger than 0 can be obtained.

For example, the B component may have a viscosity (that is mainly determined by the type of prepolymer which again depends on the type and amount of the MDI monomers) of 2500 - 3500, preferentially 3200mPas /25°C. This may be advantageous as this viscosity may ensure that the CO2 bubbles rest for a sufficiently long time interval in the PU reaction mixture to allow for the generation of a flexible PU foam. Polyols of the desired viscosity are available commercially.

According to embodiments, the 2,2' methylendiphenyldiisocyanate is comprised in a mixture of isocyanate monomers used for generating the B component to an amount of 1,0 to 7 % by weight of said mixture. Said mixture is also referred herein as "premix", "MDI premix" or "pre-mixture". This amount of the particular monomer 2,2' methylendiphenyldiisocyanate has been observed to be particularly effective in retarding the reaction speed of the polyaddition reaction that creates the PU polymer.

According to some embodiments, the polyol of the A component being a primary hydroxyl terminated diol of the molecular weight 1000- 4000 Dalton. For example, said polyol may be polyethylene (PE).

According to embodiments, the polyol of the A component has a viscosity of 2500 to 3500 mPas/25°C. This may be advantageous as this viscosity may ensure that the CO2 bubbles rest for a sufficiently long time interval in the PU reaction mixture to allow for the generation of flexible PU foam. Polyols of the desired viscosity are available commercially.

In accordance with some examples, at least the B component and the A component are held separately in an apparatus or vehicle. For example, the apparatus or vehicle may comprise a first tank for the A component including the water and may comprise a second tank for the B component. Alternatively, the water may be stored not as part of the A component but as a separate reaction component in a third tank. In some examples, all reactive components are held in the apparatus or vehicle in a predetermined temperature range and are pumped in a prefixed ratio through a static mixer before being applied on the ground.

For example, the ground can be concrete, soil or wood or any other kind of material. The reaction mixture is applied to the ground directly in the absence of an adhesive layer. An adhesive layer may not be necessary as the reaction mixture is sufficiently fluid to infiltrate depressions and wells and to level out depressions and other irregularities of the ground ("floating floor").

According to embodiments, applying the reaction mixture to the ground comprises applying a first lane of the reaction mixture to the ground. Before the foam of the first lane has solidified, a second lane of the reaction mixture is applied to the ground such that a side edge of the second lane is in contact with a side edge of the first lane. Thus, multiple parallel lanes of the reaction mixture may be applied which intermix at the lane edges in a highly viscous but liquid state automatically. This may allow the foam of the first and second lane to intermix at the contact edges of the lanes before the foam of both lane solidifies. Thus, no additional working step for sealing or gluing the different lanes to each other is necessary. In some examples, a water-proof coating is applied directly on multiple lanes without a preceding step of attaching the two lanes to each other.

According to embodiments, the reaction mixture is applied to the ground by a vehicle or by an apparatus carried by a user. The method further comprises automatically determining the position and/or the speed of the vehicle or apparatus used for applying the reaction mixture to the ground; and automatically adjusting the type and/or quantity of reactive components mixed together to generate the reaction mixture in dependence on the position and the speed of the vehicle or the user carrying the apparatus. For example, the amount of reactive components mixed together in a given time minute may be automatically adapted to the movement speed of the person or the vehicle, thereby ensuring that a constant volume of the liquid PU reaction mixture is applied per area unit of the sports field ground. The total amount of PU reaction mixture per area unit may depend on the particular requirements of the sports field regarding e.g. elasticity of the flooring. Typically, the solidified PU foam will have a thickness of about 1 to 5 cm.

According to embodiments, the method comprises applying, after the applied polyurethane foam has solidified or hardened, a sealing coating. The sealing coating preferentially covers multiple lanes of the polyurethane ground. The application of the sealing coating comprises skipping any operation for gluing adjacent lanes to each other (as known from prior art methods which apply prefabricated patches of artificial turf.

In a further aspect, the invention relates to a system for producing a polyurethane flooring for a sports field. The system comprises an A component, a B component and water. The A component is a polyol mixture. The B component is an isocyanate mixture. The water may be added separately or as part of the A component. In any case, the water and the B- component are stored in different containers. The system further comprises a mixer for mixing the A component, the B component and the water for generating a liquid polyurethane reaction mixture and a nozzle. The nozzle is coupled to the mixer for applying the polyurethane reaction mixture to a ground of the sports field before chemical reactions in the reaction mixture have generated a solid polyurethane foam. After its solidification, the polyurethane foam is to be used as the polyurethane flooring of the sports field. The composition of the reactive components and the reaction mixture may correspond to any of the embodiments and examples described herein, including the embodiments and examples presented for the method of generating the PU based flooring.

In a further aspect, the invention relates to a portable apparatus comprising said system. For example, the apparatus may comprise at least two separate containers or tanks for storing the A component and the B component separately. Optionally, the apparatus may comprise a thermometer or a network interface for receiving temperature and weather data from a remote weather service, and/or may comprise a GPS module for automatically determining the position and/or velocity of the apparatus. Said data may be used automatically for determining the amount of reactants mixed together per time unit, the amount of the second zeolite soaked with water to be added to the reaction mixture, if any, and to determine if the application of the PU foam should be postponed due to heavy rainfall (drizzle rain will in many cases not preclude the application of the PU reaction mixture).

In a further aspect, the invention relates to a vehicle comprising said system. The vehicle can be, for example, a paving machine.

For example, the first and second containers may be boxes, bottles or other forms of containers which comprise the reactants, and optional additive substances such as catalysts, fungicides, flame retardants, pigments, filler materials or the like. At least the A component and the B component are contained in different containers to prevent a premature start of the reaction. The reaction tank may comprise the nozzle as an integral part or may, alternatively, be coupled to the nozzle via a duct such that the PU foam generated in the reaction tank upon mixing the reactive components is applied to the ground via the duct and via the nozzle. For example, the first and second containers can be an integral part of an apparatus or vehicle comprising the reaction tank and the nozzle. Alternatively, the first and second containers are separate, mobile containers, e.g. transport containers, which are merely used as carriers for providing the educts such that the educts can be added to the reaction tank manually.

According to some examples, all reactive components can be stored in a reaction tank of the apparatus or vehicle and can be pumped in a predefined ratio through a static mixer before being applied on the ground. The first and second containers and the nozzle can be coupled to the reaction tank of the apparatus or vehicle via a respective duct. It is also possible that the reaction tank lacks a mixer. In this case, a user has to manually mix the reaction components. Optionally, the reaction tank or the apparatus comprising it may be actively heated and/or cooled to have a predetermined temperature in the range is between 5° C and 45° C, more preferentially between 10° C and 25 °C, or is selectively used in case the environment temperature is within said temperature range.

The solidification and curing of the applied PU reaction mixture typically takes 30 minutes to several hours and is performed at the environmental temperatures which preferentially should be in the range of 5-45°C.

In a further aspect, the invention relates to a PU flooring of a sports field manufactured by a method according to any one of the embodiments and examples described herein.

According to embodiments, the position and/or the speed of the vehicle or apparatus used for applying the foam to the ground is measured, e.g. by a GPS device contained in or coupled to the vehicle or apparatus, and the process parameters (e.g. mixing speed, foam output per time unit amount of educts used and added to the reaction mixture per time unit) and the type and quantity of components (e.g. A component, water, B component, catalyst, etc.) are adjusted depending on the position and the speed of the vehicle or the user carrying the apparatus. Thus, the PU foam output may automatically and dynamically be adjusted e.g. in dependence on the movement speed of the vehicle or the user carrying the PU foam application apparatus. This may ensure that the PU foam is applied evenly and homogeneously on the ground of the sport field irrespective of the (variable) movement speed of a user.

According to embodiments, the method further comprises mixing rubber granulates into the foam before applying the foam to the ground. The rubber granules may further increase the elasticity of the ground and may provide for a pleasant, natural haptic of the generated PU-based sport field.

According to embodiments, the method further comprises: applying, after the polyurethane foam has solidified or hardened, a sealing coating. The sealing coating preferentially covers multiple lanes of the polyurethane ground. The application of the sealing coating comprises skipping any operation for gluing adjacent lanes to each other. This "gluing/adhesive" step for attaching PU-edges of different lanes to each other can be avoided as the not yet solidified PU foam masses of the two lanes automatically intermix when they are brought in contact with each other. Thus, the step of applying the sealing coating can be performed as soon as the PU form has completely hardened, typically within one or a few days. The sealing coating improves the water resistance of the PU foam. For example, the sealing coating may be a PU varnish.

In a further beneficial aspect, embodiments of the invention are robust against rain even before the PU foam has solidified, at least in respect to drizzling or normal rain. This is because rain falling on the surface of the non-yet solidified PU foam automatically results in the creation of a protective PU film that prevents the rain from reaching inner regions of the PU foam. The surface may have become rough due the rain drops. However, according to embodiments, this the surface of the solidified PU foam on the ground of the sport field can easily be smoothed by grinding off the rough surface generated by the rain drops and then sealing the smoothed surface.

Thus, in a further beneficial aspect, the reactants used for PU foam generation according to embodiments of the invention are chosen such that the PU generation is retarded: even a direct contact with water, e.g. with rain drops, does not lead to an explosion of the reaction mixture (as would be the case with standard reaction mixtures used for quickly generating PU foam in a factory hall).

"Polyurethanes" (PU) as used herein are any type of polymer containing a urethane linage. The urethane linkage (carbamate group) is -NH-CO-O-. PUs are formed by reacting isocyanates with compounds that have an active hydrogen, such as diols, that contain hydroxyl-groups, typically in the presence of a catalyst. Since there are many compounds containing active hydrogens and many different diisocyanates, the number of polyurethanes that can be synthesized is also large. The specific properties of the polyurethane can be tailored to a specific need by combining the appropriate compounds. Polymers are macromolecules made up of smaller, repeating units known as monomers. Generally, they consist of a primary long-chain backbone molecule with attached side groups.

A "vehicle" as used herein is a self-propelled, commonly wheeled, machine that is manually or automatically controlled and that is used for applying PU reaction mixture on a ground of a sport field. For example, the vehicle may be a paving machine comprising a reaction tank, two or more tanks for the educts and a nozzle for applying the generated PU reaction mixture on the ground. At the moment of applying the PU reaction mixture, the PU reaction mixture may already comprise some products, i.e., PU polymers, but the majority of PU polymers are generated after having applied the reaction mixture on the ground.

An "apparatus" as used herein is a portable device that can be carried by a user and used to apply the foam generated in the reaction tank to the ground. Typically, the apparatus is used for in-situ PU foam generation for smaller sport fields.

An "sport field", "pitch" or "sports ground" as used herein is an indoor or outdoor playing area for various sports, e.g. soccer, tennis, hand ball, sprint races and others.

A "zeolite" as used herein is a substance, e.g. a microporous aluminosilicate mineral, which has the capability of absorbing water and releasing the absorbed water gradually over a period of time typically comprising multiple minutes, hours or even days. According to embodiments, a first zeolite is used for drying the reaction components, in particular the A component, and a second zeolite is added to the reaction mixture for slowly releasing absorbed water. The released water can act as a reaction partner in a chemical reaction with a B component that creates CO2 gas. Zeolites have a porous structure that can accommodate a wide variety of cations, such as Na+, K+, Ca2+, Mg2+ and others. These positive ions are rather loosely held and can readily be exchanged for others in a contact solution. In some embodiments, naturally occurring Zeolites are used. In other embodiments, zeolites are used that are industrially produced. Some of the more common mineral zeolites are analcime, chabazite, clinoptilolite, heulandite, natrolite, phillipsite, and stilbite. An example mineral formula is: Na2Al2Si3O10·2H2O, the formula for natrolite. Naturally occurring zeolites are rarely pure. For this reason, industrially produced zeolites are preferentially used due to their uniformity and purity.

An "NCO/OH molar ratio" or "isocyanate index" as used herein is the ratio of the reactive groups of the polyol of the A component and the B component used in a polymerization reaction to generate polyurethane. For an isocyanate, the reactive group is -N=C=O (NCO). The reactive group for a polyol is -O-H (OH). Typically, when generating polyurethane in a factory, the molar ratio of NCO and OH is one or very close to one, e.g. 1,02. Embodiments of the invention use a highly unusual, high NCO/OH molar ratio. This high ratio may allow generating a large amount of CO2 upon an isocyanate reacting with water to form an -NH2 group and a CO2 molecule. This reaction is performed in the mixture of reactive components in parallel and in competition to the polymerization reaction that connects the isocyanate molecules and the polyol molecules to form the PU. Thus, the isocyanate index is the ratio of the equivalent amount of isocyanate used relative to the theoretical equivalent amount times 100. The theoretical equivalent amount is equal to one equivalent isocyanate per one equivalent OH group of the polyol. Depending on the molecular weight of the polyol and of the isocyanate used, this isocyanate index can be obtained by mixing different parts by weight of the polyol and the isocyanate and respective components.

When reacting an isocyanate in one or more polyols to form a polyurethane, one NCO group reacts with one OH group. When the number of NCO groups equals the number of OH groups, a stoichiometric NCO:OH ratio of 1.0 is obtained. This ratio is commonly referred to as the "index". To determine the amount of isocyanate required to react with a given polyol, the desired index (often 1), the isocyanate equivalent weight and the weight fractions and equivalent weights of the polyols and water to be added to the reaction mixture is taken into account.

An "isocyanate component" or "B component" as used herein is a substance or substance mixture comprising at least an isocyanate and optionally further substances, e.g. one or more different isocyanates or additives.

A "polyol component" or "A component" as used herein is a substance or substance mixture comprising at least one polyol, e.g. a diol, and optionally further substances, e.g. one or more different polyols and/or additives. Optionally, the A component may also comprise the water used as educt in the blowing reaction to produce the CO2 to act as the blowing agent when generating the PU foam.

A "foam" as used herein is a colloidal dispersion of a gas in a liquid or solid medium. At the moment when the foam is applied on the ground, the foam is a colloidal dispersion of gas in a liquid medium, e.g. a liquid, viscous reaction mixture comprising all necessary educts for generating PU and for continuously generating CO2 until PU generation has completed. At least a small fraction of the liquid reaction mixture may have already reacted into PU at the moment of applying the liquid PU foam on the ground, whereby the remaining fraction of the reaction mixture may not yet have reacted into PU. The gas may be, for example, CO2 generated by a reaction of water with the B component. The remaining fraction may react into PU within the next few, e.g. 6 hours after having applied the liquid foam on the ground, whereby the CO gas bubble production continues until said reaction has completed.

The "hydroxyl number" is the number of milligrams of potassium hydroxide required to neutralize the acetic acid taken up on acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance.

### Brief description of the drawings

In the following embodiments of the invention are explained in greater detail, by way of example only, making reference to the drawings in which:
- Figure 1: depicts the application of in-situ generated PU foam on a sport field ground;
- Figure 2: depicts an athletic track comprising multiple lanes;
- Figure 3: depicts the automatic intermixing of adjacent PU foam lanes;
- Figure 4: depicts three fresh PU foam lanes;
- Figure 5: depicts a paving machine that applies PU foam on the ground;
- Figure 6: is a flowchart of a method of generating a PU-based flooring of a sports ground;
- Figure 7: depicts the gellation reaction for generating PU;
- Figure 8: depicts the blowing reaction for generating CO2 as the blowing agent; and
- Figure 9: depicts the composition of the A component and of the B component.

### Detailed description

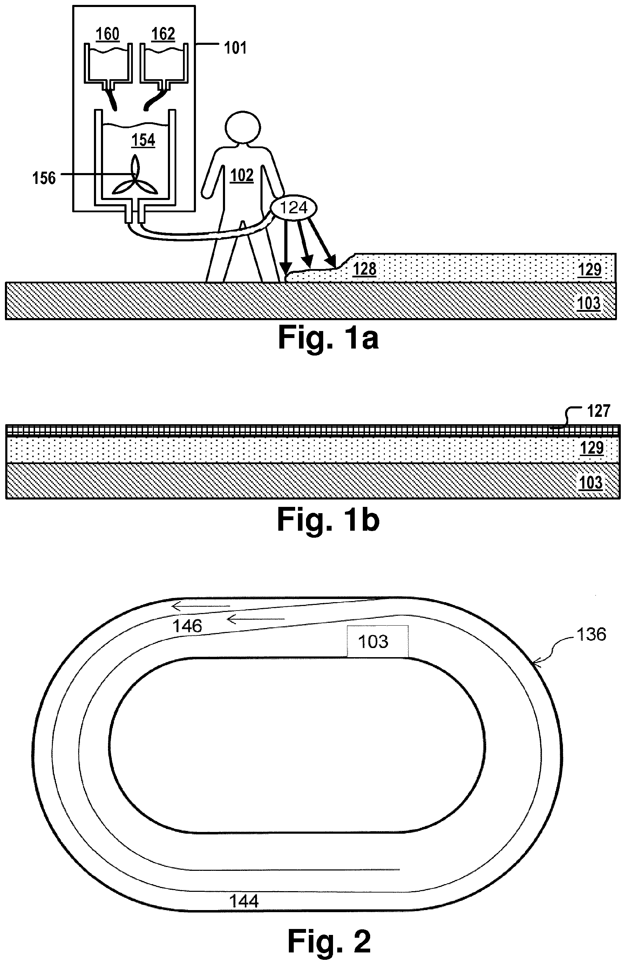

**Figure 1** depicts the application of in-situ generated PU reaction mixture 128 on a sport field ground 103. A user 102 carries a portable apparatus 101 comprising a reaction tank 154 with a mixer 156 that is coupled to a nozzle 124 via a duct. The system comprises a first container 160 with a B component and a second container 162 for the A component. In the depicted example, the A component comprises an exactly defined amount of water, while all other substances of the A component may have been dried in a pre-processing step with the help of a first zeolite. The amount of water and the type and amount of polyol and isocyanates are chosen such that a sufficient amount of CO2 is continuously generated in a blowing reaction for boosting the generation of the PU foam. Optionally, the reaction mixture comprises a second zeolite with absorbed water for boosting the blowing reaction in case the ambient temperature is high. The first and second containers can be coupled directly to the mixer 156 or can be coupled indirectly to the mixer via the reaction tank 154. In other examples, the first and second containers may simply be transport containers which are not coupled to the reaction tank and are merely used for transporting the reactants and for filling the reactants into the reaction tank. The viscosity of the PU reaction mixture 128 generated by the blowing reaction and the gellation reaction that happen in parallel may depend on the specific composition of the reaction mixture in the reaction tank 154. Preferentially, the viscosity is low enough to allow self-levelling of the viscous liquid PU reaction mixture or PU foam 128 into a plane PU foam layer that slowly solidifies into a foamed PU based flooring 129 of a sport field. Thus, uneven ground surfaces, damaged areas and hollows in the ground are filled by the PU foam and an even PU foam layer is generated that solidifies after some hours to form the PU based, elastic flooring of the sport field. However, the viscosity should be high enough to retain the CO2 bubbles to allow the PU foam to build.

The PU foam is allowed to dry and solidify completely. Depending on the temperature and other weather conditions, complete solidification is typically accomplished within 1 to 15 hours after the mixing of the reactive components, e.g. between 6 to 10 hours after the mixing of the reactive components.

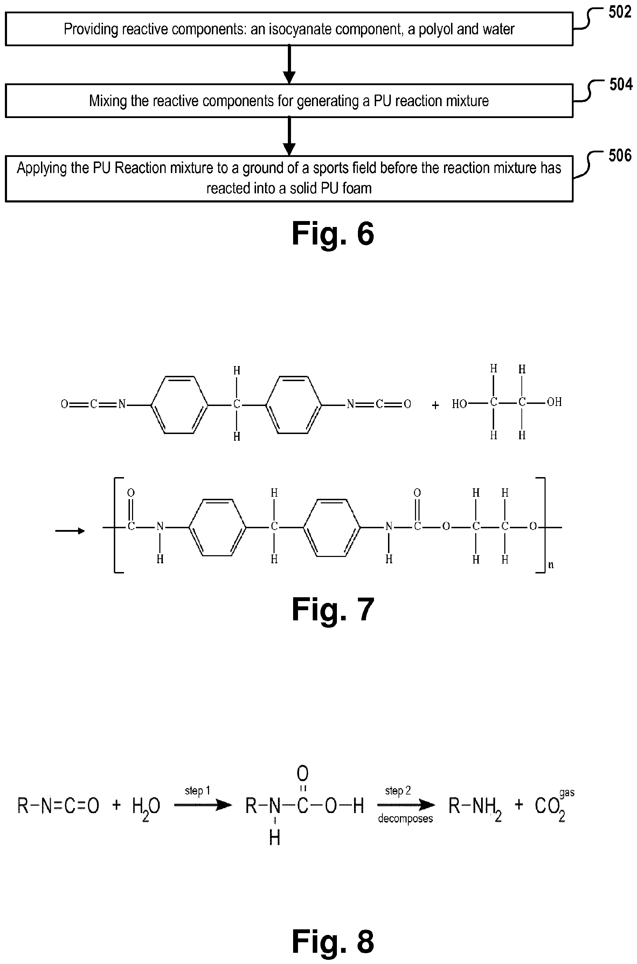

The water can be contained in a separate container or can be part of the A component contained in the second container. The A component, the B component and the water may be provided in a step 502 of a method shown in Fig. 6. For example, said substances can be provided by a user who adds said substances to the first or second containers or who adds said substances directly in the reaction container.

In step 504 the mixer mixes all components of the reaction mixture, i.e., all reactive components for producing polyurethane foam and optionally one or more of the additives and/or filler materials mentioned above. By mixing the A component, the B component and the water, chemical reactions, in particular a gellation reaction that generates PU polymers and a blowing reaction that generates CO2 as a blowing agent are triggered which in effect result in the generation of PU foam.

The composition of the reaction mixture, in particular the amount of water and the MDI monomers in the B component are chosen such that the formation of CO2 is performed at the same time as the urethane polymerization (gellation) is occurring. The carbon dioxide is generated by reacting isocyanate with the water.

When the mixer has mixed the reaction mixture homogeneously, the reaction mixture starts generating PU polymers and CO2 gas bubbles and is referred to as "PU liquid" or "liquid PU reaction mixture" although the chemical reactions for generating the PU foam may immediately start and may immediately generate some CO2 bubbles. The PU reaction mixture is transported from the mixer to a nozzle 124 and is applied directly on the floor of a sport field. The user 102 may apply multiple lanes of the PU reaction mixture to generate the PU flooring for a larger area. Preferentially, the PU reaction mixture is applied on an outdoor ground, but it is also possible to apply the method for generating indoor sport field floorings. In solidified and dried state, the PU foam 129 is used as the polyurethane flooring of the sport field.

Optionally, the solidified PU layer 129 can be coated with a protective and water repellent layer 127 ("coating"), e.g. for increasing the resistance of the flooring to heat, UV light, rain, fungi and other factors (see Fig. 1b) and/or to give the flooring a desired color.

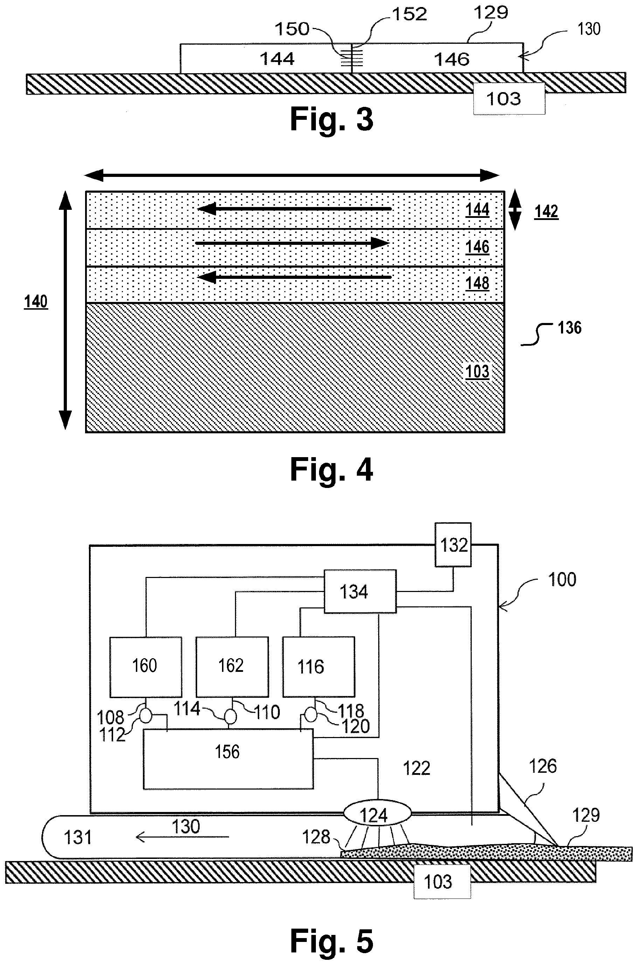

**Figure 4** shows one embodiment of a PU flooring of a sport field comprising multiple lanes and **figure 3** depicts the automatic intermixing of adjacent PU foam lanes. The ground 103 to be applied with a polyurethane flooring is a rectangular sports field 136 with a length 138 and a width 140. The ground 103 may be prepared, e.g. concreted and/or leveled, or unprepared. The user 102 may use a portable apparatus 101 as shown in Fig. 1a or a vehicle 100 as shown in Fig. 5 for applying a lane of the liquid foam 128 having a width 142 which is smaller than the width 140 of the sports ground 136. Therefore, the PU reaction mixture is applied to the ground 103 in lanes 144, 146, 148, wherein adjacent lanes 144, 146, 148 are in contact with each other. The foam of a second lane 146 which is applied after the foam of a first lane 144 immediately intermixes with and generates a coherent mass with the foam of the first lane 144 (see **figure 3**) so that a side edge 150 of the first lane 144 is in contact with the side edge 152 of the second lane 146. The side edge 130 would contact the side edge of lane 148 once said lane is applied on the ground.

In case a vehicle is used, the vehicle may comprise a levelling unit 126 and an injection unit 126. The levelling unit is wider in shape than the injection unit 124 so that the levelling unit 126 can smooth the transition from the first lane 144 to the second lane 146.

**Figure 2** schematically shows a second embodiment of a method for applying foam for a polyurethane flooring to a ground 103 of an athletic track comprising multiple lanes. In this embodiment, the sport field is an oval track field. The user with the apparatus 101 or with the vehicle 100 moves around the field applying the PU reaction mixture 128 that slowly starts to foam. The second lane 146 connects at the starting point of the first lane 144, whereby the apparatus or vehicle moves radially inwards so that the path of motion of the apparatus 100 is spiral.

Independently from the geometry in which the reaction mixture is applied to the ground, the foam/mixture of the first lane 144 should be in a liquid state when applied the adjacent second lane 146. If the foam 128 of the first and the second lanes 144, 146 are both liquid respectively not cured, the foam of both lanes 144, 146 is mixed up in the contact zone and/or bond firmly together to improve a continuous polyurethane flooring. Furthermore, the user 102 can use a levelling unit 126 of the vehicle or a mechanical tool to smooth the PU foam to produce an even and smooth surface 129.

Therefore, the method comprises applying the foam of the second lane 146 before the foam of the first lane 144 solidifies (is cured). Especially in hot, dry climate conditions and floorings with large expansions it is important to start applying the second lane shortly, preferentially within 30 minutes or one hour after having generated the first lane, to prevent that the curing process may have started before the second lane is applied to the ground 103.

To avoid an early curing process, the components of the reaction mixture used for generating the PU foam and the process parameters of the mixing process can be customized to the environmental conditions.

Distributing various sensors 132 at different positions of the ground may have the advantage that the environmental data of an unfavorably positioned sensor 132 can be compensated for. For example, one sensor can be positioned in shadow so that the temperature of this sensor is lower than the temperature of the remaining ground. For example, the mixture can be customized such that the process parameters enable the deposition of the foam using the worst measured environmental conditions of the sensors. For example the highest measured temperature. Alternatively, a map of the environmental data may be created and the mixture and the process parameters are customized continuously on the basis of this map and the current position of the apparatus 100.

Furthermore, additional environmental data may be taken into account, for example a weather forecast, a time of the day or the relative humidity. Due to the weather forecast and the time of day a rising of the temperatures during the process may by predicted in order to adapt the mixture and the process parameters to the rising temperatures. For example, additional environmental data may be received from a meteorological service.

The environmental data may be measured at the beginning of the process or continuously in order to adjust the mixture and the process parameters continuously to the environmental data. The environmental data may be stored to a memory of the control unit 134. The stored data may be used to improve the prediction of temperatures or to control the current mixing process.

In a further embodiment, the position and/or the speed of the apparatus 100 may be determined by additional sensors. By this information, the control unit 134 may calculate the time between applying the first and the second lanes, calculate the required curing time and adapt the mixture and the process parameters of the foam.

**Figure 5** depicts a system 100 in the form of a paving machine that applies PU reaction mixture 128 on the ground as depicted in Fig. 1. The PU reaction mixture 128 consists essentially of two reactive components, A B component and an A component that may in addition comprise a defined amount of water as a further reactive component. Depending on the desired properties of the flooring, various polyurethane forming ingredients, for example chemical additives, compressed air or other additives may be added. The composition and amount of the reactive components and the additives, e.g. catalysts and/or a second zeolite soaked with additional water to compensate high temperatures, may influence the speed of PU polymer generation and/or the speed of CO2 production as well as mechanical properties of the flooring, the resistance to climate conditions, the water absorbency, the viscosity of the PU foam, the stability of the PU foam, the curing time, the color or other characteristics of the flooring.

For example, the additives may comprise emulsifiers and/or foam stabilizers, e.g. high sheer resistant silicone foam stabilizers. Catalysts might be used to moderately enhance the reactivity of the mixture between the NCO terminal prepolymer and/or the polymeric isocyanate on one hand and the polyol of the A component. Moreover, pigments and UV stabilizers might be used.

The system 100 comprises tanks 160, 162 for the basic materials of the polyurethane, wherein the first tank 160 contains the B component and the second tank 162 contains the A component and the defined amount of water. Both tanks 160, 162 are connected with ducts 108, 110 to a mixing unit 156 in which the components are mixed to a foam 128 for the polyurethane flooring. Each duct 108, 110 comprises a valve 112, 114 for dosing the amount of polyol respectively isocyanate which flows from the respective tank 160, 162 to the mixing unit 156. The ducts 108, 110 may comprise a supply unit, for example a pump. In the example depicted in Fig. 5, the apparatus is a vehicle, but the portable apparatus depicted in Fig. 1a could likewise comprise the same or functionally equivalent components as described for the vehicle of Fig. 5.

Alternatively, the system 100 can comprise a further tank 116 comprising the defined amount of water for the blowing reaction and/or comprising various polyurethane forming ingredients. The further tank 116 is connected with a duct 118 to the mixing unit 156. The duct comprises a valve 120. The system 100 may comprise various tanks for various additives depending on the desired number of additives to be added to the foam 128 for the polyurethane flooring.

The mixing unit 156 comprises means for producing a reaction mixture for generating polyurethane foam. The mixing unit 106 is connected with a duct 122 to an application unit 124 which is configured for applying the reaction mixture 128 to a ground 103. The application unit 124 may comprise a various number of nozzles for applying the mixture 128 to the ground 103. The nozzles may be spaced out evenly over the entire width of the application unit 124. Alternatively, there may be a single nozzle or a bundle of nozzles and a user may have to smoothly move the nozzle from one side to the other to evenly spread the PU foam over the ground (see Fig. 1a).

Furthermore, the system 100 comprises a levelling unit 126 for levelling and smoothing the applied mixture 128. The levelling unit 126 may be a scraper, which is located in a drive direction 130 of the apparatus 100 behind the injection unit 124. The levelling unit 126 is configured for smoothing the surface 129 of the applied foam and or for taking up excess foam.

The vehicle comprises a driving unit 131 for driving the apparatus 100 in the drive direction 130.

Furthermore, a sensor 132 for measuring environmental conditions may be provided as part of the vehicle 100. The sensor 132 may be configured for measuring the air temperature, the ground temperature, the relative humidity or other climate conditions. Various sensors for determining various environmental data may be provided.

The valves 112, 114, 120, the mixing unit 156, the application unit 124, the levelling unit 126, the drive unit and the sensor 132 are connected to a control unit 134. The control unit 134 is configured for receiving environmental data measured by the sensor 132 and to control the valves 112, 114, 120, the mixing unit 106, the application unit 124, the drive unit 131 and the levelling unit 126 depending on the received environmental data.

The environmental data are measured by the sensor 132 and sent to the control unit 134. The control unit 134 controls the valves 112, 114, 120 so that the desired mixture of polyol, isocyanate, water and additives is mixed. Furthermore, the amount of zeolite-bound water and/or the amount of catalysts or other process parameters can be adjusted by controlling the mixing unit 156.

Furthermore, the control unit may take into account the geometry of the ground, the planned path, respectively the length of each lane 144, 146, 148, the thickness of the polyurethane flooring and the speed of the system 100 (vehicle or portable apparatus) into the process of determination the mixture 128 in order to ensure that the foam of a first lane 144 is not cured before the foam of the second lane 146 is applied and/or to ensure that a sufficient amount of PU foam is applied to reach the desired minimum thickness and elasticity of the PU flooring.

In the described embodiment, the sensor 132 is attached to the system 100 so that the environmental conditions are measured at the position of the apparatus 100. Therefore, the mixture and the process parameters can be adapted continuously to the current conditions so that a constant curing time of the PU foam generated from the applied mixture 128 can be achieved.

Alternatively or in addition, stationary sensors can be used. Stationary sensors can be positioned at various positions of the ground 103 in order to achieve the environmental conditions in advance in order to customize the mixture of the foam to these conditions. In these embodiments, the sensors 132 may be connected to the control unit 134 by any wireless connection, for example a radio connection or a WLAN-connection, whereby the sensor 132 comprises a transmitter and the control unit 134 comprises a receiver.

**Figure 6** is a flowchart of a method of generating a PU-based flooring of a sports ground. The reactants, i.e., at least a polyol, an isocyanate and water and optionally one or more additives are provided in step 502, e.g. by filling the reactants into different containers 160, 162. The reactants and optionally one or more additives are added and distributed to the different containers such that the substances in each of the containers basically do not react with each other. Then, in step 504, an automated mixing device or a mechanical mixer operated by a human is used for mixing the reactants for triggering one or more chemical reactions, e.g. the gellation reaction and the blowing reaction to generate PU polymers that are foamed by the blowing agent CO2. The PU reaction mixture for chemically generating the PU foam is applied to the ground of a sport field.

After applying the polyurethane reaction mixture to the ground, the ground is optionally smoothed and leveled to a predetermined roughness and level. In some examples, the viscosity of the PU foam is small enough to allow self-levelling. After the smoothing and levelling process, the polyurethane foam cures. Optionally, the solidified, cured PU layer is coated with a further, protective layer 127. A separate step to anneal edges of two adjacent lanes to each other is not necessary.

Again, the application may be performed fully automatically as described for example for fig. 5 or can be performed semi-automatically by a user 102 using a portable PU foam application apparatus.

**Figure 7** depicts the gellation reaction for generating PU. In order to produce polyurethane, a polyaddition reaction is performed. In this type of chemical reaction, the isocyanate monomers and the prepolymer in the B component contain reacting end groups. Specifically, a diisocyanate (OCN-R-NCO) is reacted with the polyol of the A component represented here as a diol (HO-R-OH). The first step of this reaction results in the chemical linking of the two molecules leaving a reactive alcohol (OH) on one side and a reactive isocyanate (NCO) on the other. These groups react further with other monomers to form a larger, longer molecule. This is typically a rapid process which yields high molecular weight materials. Embodiments of the invention may allow selecting the type and amount of the reactive components and/or catalysts such that the reaction (gellation reaction) that generates the PU polymers is retarded. The reaction is retarded such that basically the PU polymer foam is built and solid after one or more hours, e.g. 1 to 10 hours after the mixing of the reactive components.

**Figure 8** depicts the blowing reaction for generating CO2 as the blowing agent. The reaction to generate carbon dioxide involves water reacting with an isocyanate first forming an unstable carbamic acid, which then decomposes into carbon dioxide and an amine. The amine reacts with more isocyanate to give a substituted urea. Water has a very low molecular weight, so even though the weight percent of water may be small, the molar proportion of water may be high and considerable amounts of urea produced. The urea is not very soluble in the reaction mixture.

As water is present in the reaction mixture, the isocyanate reacts with water to form an urea linkage and carbon dioxide gas and the resulting polymer contains both urethane and urea linkages. This reaction is referred to as the blowing reaction.

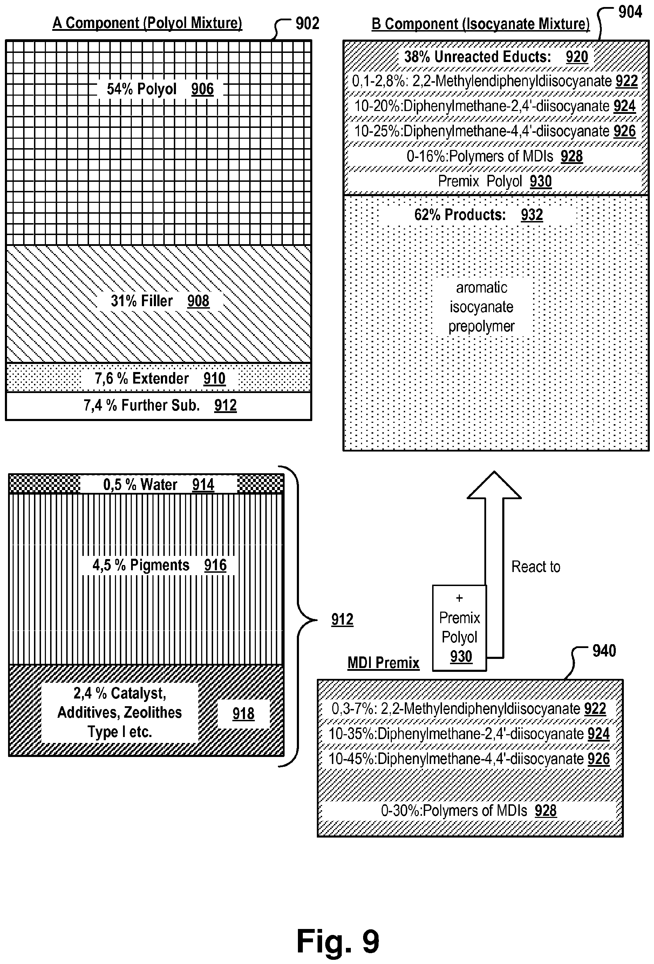

**Figure 9** illustrates the composition of the reaction mixture for generating PU foam according to some embodiments of the invention. In the depicted embodiments, the water is added to the reaction mixture as an ingredient of the A component 902.

In the following, four examples RM1-RM4 for a reaction mixture RM comprising different amounts (specified in "parts by weight") of an A component 902 and a B component 904 will be given:

| | parts by weight A component | parts by weight B component | Hydroxyl number of polyol of A component [mg KOH/g A component] | NCO content of B component | **NCO index of RM** |
|---|---|---|---|---|---|
| RM1 | 100 | 80 | 96,24-109,74 | 10% | **1,16** |
| RM2 | 100 | 95 | 96,24-109,74 | 10% | **1,16** |
| RM3 | 100 | 60 | 96,24-109,74 | 14% | **1,16** |
| RM4 | 100 | 68 | 96,24-109,74 | 14% | **1,16** |

For example, the polyol 906 may have a hydroxyl number of 155-180 mg KOH/g polyol 906. As the polyol has a share of the A component of about 54 % by weight in the depicted example, the hydroxyl number of the "complete" A component is diluted/reduced in accordance with the share of the polyol in the A component.

Thus, according to the first example RM1, the isocyanate index of 1.16 is obtained by mixing 100 parts by weight of the A component whose polyol 906 has a hydroxyl number in a range of 155-180 mg KOH/g mg KOH/g with 80 parts by weight of the B component having an NCO-content of 10% for generating the reaction mixture.

According to embodiments, the polyol 906 of the A component 902 is a polyetherpolyols or a polyesterpolyol. The polyol can be branched. The polyol can be a primary hydroxyl terminated diol. For example, the polyol 906 can have a molecular weight of 1000- 4000 Dalton, e.g. 1190 Dalton. The polyol 906 preferentially has a viscosity of 2500-3500 mPas/25°C. According to some examples, the polyol has an acid value of up to 3 and/or a density of 1,0 g/cm³. The acid value (or "neutralization number") is the mass of potassium hydroxide (KOH) in milligrams that is required to neutralize one gram of the chemical substance. The acid value is a measure of the amount of carboxylic acid groups in a chemical compound, such as a fatty acid, or in a mixture of compounds. The polyol 906 can be, for example, a polyetherpolyols, e.g. polypropyleneglycol. Polyetherpolyols may be manufactured e.g. from propylenoxide and may have the advantage of generating a PU with good coherence properties. Alternatively, the polyol can be a polyesterpolyol which may have the advantage of generating a PU with good adhesion properties (to the non-PU ground). The polyol can also be a mixture of polyester-polyols and polyether polyols having the advantage of a good compromise between adherence and coherence capabilities of the generated PU foam.

In the following, the A component will be described in greater detail for embodiments of the invention, whereby the "%" values are "% by weight of the A component":.
- 54% polyol 906, e.g. a polyethylene; according to embodiments, the polyol 906 of the A component is a polyether polyol or a polyester polyol or a mixture thereof. It has a hydroxyl number of 155-180 mg KOH/g /g polyol;
- 31 % filling material 908, e.g. calcium carbonate;
- 7,6% extender 910, e.g. castor oil;
- 0,5% water 914; the water is added in a very precise amount by drying the other ingredients of the A component, e.g. with a first zeolite;
- 7,4% further substances 912, e.g.:
   ∘ 4,5% inorganic and/or organic pigments 916, e.g. iron oxide pigments, titandioxide, etc;
   ∘ 2,4 % of further substances 918, e.g. 0,001% catalyst of the PU polyaddition reaction, e.g. Di-n-octyltinneodecanoat, 0,14% surfactants and emulsifiers, remnants of the first zeolite used for drying the A component before adding the water.

According to embodiments, the A component in addition comprises 0,5-2% of a second zeolite soaked with water (the amount of filler material is adapted accordingly). To prohibit an absorption of the additional water bound to the second zeolite by the first zeolite, the first zeolite is either removed from the A component after the drying process or is deactivated. Alternatively, the first zeolite is a zeolite that absorbs water much slower than the second zeolite desorbs the water and that also absorbs the water slower than the speed of the desorbed water reacting with the B component to CO2. The second zeolite may be added to the reaction mixture immediately before the PU reaction mixture is applied on the ground. Thus, the time will not suffice for the first zeolite to absorb the additional water that is provided by the second zeolite.

Surfactants and emulsifiers are used to emulsify the liquid components, regulate foam cell size, and stabilize the cell structure to prevent collapse and surface defects of the PU foam. Rigid foam surfactants are designed to produce very fine cells and closed cell structures. Flexible foam surfactants are designed to stabilize the reaction mass while at the same time maximizing open cell content to prevent the foam from shrinking. Thus, the reaction mixture that is used for generating the PU foam may in fact comprise a significant portion of additional substances for modifying the viscosity and foam bubble properties, for colorizing the foam, for acting as a filler or for other technical purposes.

According to embodiments, the B component 904 is created by reacting about 40 parts by weight of an MDI premix 940 with about 60 parts by weight of a premix polyol 930. The premix polyol may be a polyetherpolyols. For example, the premix polyol may have a molecular weight of about 2000 Dalton and a hydroxyl number in the range of 30-160 mg KOH/g polyol, e.g. 55 mg KOH/g. In some example embodiments, the premix polyol 930 and the polyol 906 of the A component can be of the same type.

According to embodiments, the MDI premix 940 for generating the B component comprises, before the premix polyol is added for generating the prepolymer:
- 0,3-7 % by weight of the MDI premix: 2,2'-Methylendiphenyldiisocyanate 922;
- 10-35 % by weight of the MDI premix: Diphenylmethane-2,4'-diisocyanate 924;
- 10-45 % by weight of the MDI premix: Diphenylmethane-4,4'-diisocyanate 926;
- 0-30 % by weight of the MDI premix: an MDI monomer 928 created by reacting two or more of the monomers 922-926 with each other.

By adding and mixing the premix polyol 930 to the MDI premix, at least a fraction of the totality of the educts 922-930 will react into a prepolymer 932, in this case an aromatic isocyanate prepolymer. The prepolymer is comparatively viscous and has a retarded reactivity in respect to polyols compared to "standard" prepolymers used in PU generation reactions.

After the reaction of the premix polyol and the MDI monomers and the MDI polymer has reached equilibrium, the resulting solution can be used as the B component. The B component 904 comprises a mixture of unreacted educts 920 (MDI monomers 922, 924, 926, optionally an MDI polymer 928 and the premix polyol 930) and the prepolymer 932 as the reaction product of the chemical reactions that takes place in the premix upon adding the premix polyol. Typically, about 62 % by weight of the B component consists of the prepolymer 932 and about 38% by weight of the B component consists of the unreacted educts 920.

Thus, in effect, according to embodiments, the B component comprises:
- 0,1-2,8 % by weight of the B-component: 2,2'-Methylendiphenyldiisocyanate 922;
- 10-20 % by weight of the B-component: Diphenylmethane-2,4'-diisocyanate 924;
- 10-25 % by weight of the B-component: Diphenylmethane-4,4'-diisocyanate 926;
- 0-16 % by weight of the B-component: an MDI monomer 928 created by reacting two or more of the monomers 922-926 with each other.
- 62 % by weight of the B-component: aromatic isocyante- prepolymer, e.g. (1,2-Propanediol, polymer with 1-isocyanato-2-(4-isocyanatophenyl)methylbenzene, 1,1 -methylenebis 4-isocyanatobenzene, methyloxirane and oxirane)

The B component has, according to some examples, has a viscosity of 3200 mPas/25°C. In some examples, the isocyanate has a density of 1,15 g/cm3.

## Claims

1. A method for producing a polyurethane flooring (129) for a sports field (136), the method comprising:
- providing (502) reactive components for producing polyurethane, the reactive components comprising an A component (902) being a polyol mixture and a B component (904) being an isocyanate mixture and water (914), the B component comprising:
∘ 2,2' methylene diphenyl diisocyanate (922);
∘ diphenylmethane-2,4'-diisocyanate (924);
∘ diphenylmethane-4,4'-diisocyanate (926); and
∘ isocyanate prepolymer (932);
- mixing (504) the reactive components for generating a liquid polyurethane reaction mixture (129);
- applying (506) the polyurethane reaction mixture (128) to a ground (103) of the sports field before chemical reactions in the reaction mixture have generated a solid polyurethane foam, the polyurethane foam after its solidification to be used as the polyurethane flooring.

2. The method of claim 1, further comprising adding di-n-octyltin neodecanoate as a catalyst for catalyzing a polyaddition reaction of the polyol and the B component to the reaction mixture, the amount of the catalyst being in the range of 0,0008 % to 0.0011% by weight of a combination of the A component and the water, the amount of the water and the amount of the 2,2'-methylene diphenyl diisocyanate (922) being chosen such that one hour after the mixing of the reactive components, more than 60% of the water has reacted to CO2 and more than 50% of the NCO groups of component B have reacted with hydroxyl groups of the polyol of the component B into the solid polyurethane foam.

3. The method of any one of the preceding claims, the water (914) being added in an amount of 0,1 - 1,5 % by weight of the A component, in particular in an amount of 0,4% - 0,6% by weight of the A component.

4. The method of any one of the preceding claims, the water (914) being added to the reaction mixture as an ingredient of the A component.

5. The method of any one of the preceding claims, the water (914) being added to the reaction mixture and/or to the A component in a free, non-zeolitbound form.

6. The method of any one of the preceding claims, further comprising:
- adding a molecular sieve material to the A component to adsorb and remove any moisture from the A component;
- optionally, if the water (914) is added to the reaction mixture as an ingredient of the A component, adding the water (914) after the moisture was removed from the A component.

7. The method of claim 6, the molecular sieve material being a first zeolite.

8. The method of any one of the previous claims, the B component (904) comprising a mixture of monomers (922-926) and polymers (928, 932) respectively comprising one or more NCO groups, the polyol (906) of the A component comprising one or more OH groups, the NCO groups in the B component and the OH groups in the polyol of the A component having an NCO/OH molar ratio in the range of 1.14:1 to 1.18:1, in particular in the range of 1.15:1 to 1.17:1.

9. The method of any one of the preceding claims, further comprising:
- adding a second zeolite to the reaction mixture, the second zeolite being soaked with further water and being adapted to desorb at least 20% of the further water to the reaction mixture within 60 minutes after creation of the reaction mixture.

10. The method of claim 9, further comprising:
- acquiring a temperature of the ground (103) of the sports field;
wherein the amount of the second zeolite depends on the measured ambient temperature, wherein the higher the temperature, the higher the amount of the second zeolite with its adsorbed further water that is added to the reaction mixture.

11. The method of any one of the previous claims, further comprising generating the B component by:
- creating an MDI premix (940)comprising:
∘ 2,2' methylene diphenyl diisocyanate (922) in an amount of 0,3 %-7% by weight of the MDI premix;
∘ diphenylmethane-2,4'-diisocyanate (924) in an amount of 10%-35% by weight of the MDI premix;
∘ diphenylmethane-4,4'-diisocyanate (926) in an amount of 10%-45% by weight of the premix; and
∘ MDI-polymers (930) consisting of two or more of said diisocyanate monomers (922, 924, 926) in an amount of 0%-30% by weight of the MDI premix;
- mixing the MDI premix 940 and a premix polyol (930) for letting the MDI premix components and the premix polyol 930 generate the B component, the B component comprising:
∘ an aromatic isocyanate prepolymer (932); and
∘ unreacted educts of the premix and the premix polyol.

12. The method of any one of the previous claims, the NCO content of the B component being between 1.5% and 18% by weight of the B component.

13. The method of claim 12, the NCO content of the B component being between 9% and 14%, e.g. 10% by weight of the B component.

14. The method of any one of the previous claims, further comprising:
using an MDI premix (940), the premix comprising a mixture of isocyanate monomers (922-926) for generating the isocyanate prepolymer (932), the MDI premix comprising the 2,2' methylene diphenyl diisocyanate (922) in an amount of 0,3 to 7 % by weight of the MDI premix.

15. The method of any one of the previous claims, wherein the polyol (906) of the A component has a viscosity of 2500 to 3500 mPas/25°C.

16. The method of any one of the previous claims, wherein the ground is made of concrete, soil or wood and wherein the reaction mixture is applied to the ground (103) directly in the absence of an adhesive layer.

17. The method of any one of the previous claims, wherein the application of the reaction mixture to the ground (103) comprises:
- applying a first lane (144) of the reaction mixture to the ground;
- before the foam of the first lane has solidified, applying a second lane (146) of the reaction mixture (128) to the ground such that a side edge of the second lane is in contact with a side edge of the first lane.

18. The method of any of the previous claims, wherein the reaction mixture is applied to the ground by a vehicle (100) or by an apparatus (101) carried by a user (102), the method further comprising:
- automatically determining the position and/or the speed of the vehicle or apparatus used for applying the reaction mixture to the ground; and
- automatically adjusting the type and/or quantity of reactive components mixed together to generate the reaction mixture in dependence on the position and the speed of the vehicle or the user (102) carrying the apparatus.

19. The method according to any one of the previous claims, further comprising: applying, after the applied polyurethane foam has solidified or hardened, a sealing coating (127), the sealing coating preferentially covering multiple lanes (144, 146, 148) of the polyurethane ground, thereby skipping any operation for gluing adjacent lanes to each other.

20. A system for producing a polyurethane flooring (128) for a sports field (136), the system comprising:
- an A component (902) being a polyol mixture;
- a B component (904) being an isocyanate mixture and comprising:
∘ 2,2' methylene diphenyl diisocyanate (922);
∘ diphenylmethane-2,4'-diisocyanate (924);
∘ diphenylmethane-4,4'-diisocyanate (926); and
∘ isocyanate prepolymer (932);
- water (914), the water and the B- component being stored in different containers;
- a mixer for mixing (504) the A component, the B component and the water for generating a liquid polyurethane reaction mixture; and
- a nozzle (124) coupled to the mixer for applying (506) the polyurethane reaction mixture (128) to a ground (103) of the sports field before chemical reactions in the reaction mixture have generated a solid polyurethane foam, the polyurethane foam after its solidification to be used as the polyurethane flooring.

21. A portable apparatus (101) comprising the system of claim 20.

22. A vehicle (100) comprising the system of claim 20.

23. A polyurethane flooring (129) of a sports field (136) manufactured by a method according to any one of the previous claims 1-19.

## Patentansprüche

1. Verfahren zum Herstellen eines Polyurethanbodenbelags (129) für einen Sportplatz (136), wobei das Verfahren umfasst:
- Bereitstellen (502) reaktiver Komponenten zur Herstellung von Polyurethan, wobei die reaktiven Komponenten eine A-Komponente (902), bei der es sich um eine Polyolmischung handelt, und eine B-Komponente (904), bei der es sich um eine Isocyanatmischung handelt, und Wasser (914) umfassen, wobei die B-Komponente umfasst:
∘ 2,2'-Methylendiphenyldiisocyanat (922);
∘ Diphenylmethan-2,4'-diisocyanat (924);
∘ Diphenylmethan-4,4'-diisocyanat (926); und
∘ Isocyanat-Prepolymer (932);
- Mischen (504) der reaktiven Komponenten zur Erzeugung einer flüssigen Polyurethan-Reaktionsmischung (129);
- Aufbringen (506) der Polyurethan-Reaktionsmischung (128) auf einen Boden (103) des Sportplatzes, bevor chemische Reaktionen in der Reaktionsmischung einen festen Polyurethanschaum gebildet haben, wobei der Polyurethanschaum nach seiner Verfestigung als der Polyurethanbodenbelag dient.

2. Verfahren nach Anspruch 1, ferner das Hinzufügen von Di-n-octylzinnneodecanoat als Katalysator zur Katalysierung einer Polyadditionsreaktion des Polyols und der B-Komponente zu der Reaktionsmischung umfassend, wobei die Menge des Katalysators im Bereich von 0,0008 % bis 0,0011 %, bezogen auf das Gewicht einer Kombination aus der A-Komponente und dem Wasser, liegt, wobei die Menge des Wassers und die Menge des 2,2'-Methylendiphenyldiisocyanats (922) so gewählt werden, dass eine Stunde nach dem Mischen der reaktiven Komponenten mehr als 60 % des Wassers in CO2 umgesetzt wurden und mehr als 50 % der NCO-Gruppen der Komponente B mit Hydroxylgruppen des Polyols der Komponente B zu festem Polyurethanschaum umgesetzt wurden.

3. Verfahren nach einem der vorstehenden Ansprüche, wobei das Wasser (914) in einer Menge von 0,1-1,5 %, bezogen auf das Gewicht der A-Komponente, zugegeben wird, insbesondere in einer Menge von 0,4 % bis 0,6 %, bezogen auf das Gewicht der A-Komponente.

4. Verfahren nach einem der vorstehenden Ansprüche, wobei das Wasser (914) als Bestandteil der A-Komponente zur Reaktionsmischung zugegeben wird.

5. Verfahren nach einem der vorstehenden Ansprüche, wobei das Wasser (914) in einer freien, nicht zeolithgebundenen Form zur Reaktionsmischung zugegeben wird.

6. Verfahren nach einem der vorangehenden Ansprüche, ferner umfassend:
- Zugeben eines Molekularsiebmaterials zur A-Komponente, um jegliche Feuchtigkeit aus der A-Komponente zu adsorbieren und zu entfernen;
- gegebenenfalls, falls das Wasser (914) als Bestandteil der A-Komponente zugegeben wird, Zugeben des Wassers (914), nachdem die Feuchtigkeit aus der A-Komponente entfernt worden ist.

7. Verfahren nach Anspruch 6, wobei das Molekularsiebmaterial ein erster Zeolith ist.

8. Verfahren nach einem der vorstehenden Ansprüche, wobei die B-Komponente (904) eine Mischung aus Monomeren (922-926) und Polymeren (928, 932) umfasst, die jeweils eine oder mehrere NCO-Gruppen umfassen, wobei das Polyol (906) der A-Komponente eine oder mehrere OH-Gruppen umfasst, die NCO-Gruppen in der B-Komponente und die OH-Gruppen im Polyol der A-Komponente ein NCO/OH-Molverhältnis im Bereich von 1,14:1 bis 1,18:1, insbesondere im Bereich von 1,15:1 bis 1,17:1 aufweisen.

9. Verfahren nach einem der vorangehenden Ansprüche, ferner umfassend:
- Zugeben eines zweiten Zeoliths zur Reaktionsmischung, wobei der zweite Zeolith mit weiterem Wasser getränkt ist und dafür ausgelegt ist, mindestens 20 % des weiteren Wassers innerhalb von 60 Minuten nach der Erzeugung der Reaktionsmischung in die Reaktionsmischung zu desorbieren.

10. Verfahren nach Anspruch 9, ferner umfassend:
- Ermitteln einer Temperatur des Bodens (103) des Sportplatzes; wobei die Menge des zweiten Zeoliths von der gemessenen Umgebungstemperatur abhängt, wobei die Menge des zweiten Zeoliths mit dem von ihm adsorbierten weiteren Wasser, die der Reaktionsmischung zugegeben wird, umso größer ist, je höher die Temperatur ist.

11. Verfahren nach einem der vorangehenden Ansprüche, ferner das Erzeugen der B-Komponente umfassend durch:
- Erzeugen einer MDI-Vormischung (940), die umfasst:
∘ 2,2'-Methylendiphenyldiisocyanat (922) in einer Menge von 0,3 % bis 7 %, bezogen auf das Gewicht der MDI-Vormischung;
∘ Diphenylmethan-2,4'-diisocyanat (924) in einer Menge von 10 % bis 35 %, bezogen auf das Gewicht der MDI-Vormischung;
∘ Diphenylmethan-4,4'-diisocyanat (926) in einer Menge von 10 % bis 45%, bezogen auf das Gewicht der Vormischung; und
∘ MDI-Polymere (930), die aus zwei oder mehr von den Diisocyanatmonomeren (922, 924, 926) bestehen, in einer Menge von 0 % bis 30 %, bezogen auf das Gewicht der MDI-Vormischung;
- Mischen der MDI-Vormischung 940 und eines Vormischungs-Polyols (930), um die MDI-Vormischungskomponenten und das Vormischungs-Polyol 930 die B-Komponente erzeugen zu lassen, wobei die B-Komponente umfasst:
∘ ein aromatisches Isocyanat-Prepolymer (932); und
∘ nicht-umgesetzte Edukte der Vormischung und des Vormischungs-Polyols.

12. Verfahren nach einem der vorstehenden Ansprüche, wobei der NCO-Gehalt der B-Komponente zwischen 1,5 % und 18 %, bezogen auf das Gewicht der B-Komponente, liegt.

13. Verfahren nach Anspruch 12, wobei der NCO-Gehalt der B-Komponente zwischen 9 % und 14 %, z.B. bei 10 %, bezogen auf das Gewicht der B-Komponente, liegt.

14. Verfahren nach einem der vorangehenden Ansprüche, ferner umfassend: Verwenden einer MDI-Vormischung (940), wobei die Vormischung eine Mischung aus Isocyanat-Monomeren (922-926) umfasst, zur Erzeugung des Isocyanat-Prepolymers (932), wobei die MDI-Vormischung das 2,2'-Methylendiphenyldiisocyanat (922) in einer Menge von 0,3 % bis 7 %, bezogen auf das Gewicht der MDI-Vormischung, umfasst.

15. Verfahren nach einem der vorangehenden Ansprüche, wobei das Polyol der A-Komponente eine Viskosität von 2500 bis 3500 mPa·s/25 °C aufweist.

16. Verfahren nach einem der vorangehenden Ansprüche, wobei der Boden aus Beton, Erdreich oder Holz besteht und wobei die Reaktionsmischung direkt, ohne eine Haftmittelschicht auf den Boden (103) aufgebracht wird.

17. Verfahren nach einem der vorangehenden Ansprüche, wobei das Aufbringen der Reaktionsmischung auf den Boden (103) umfasst:
- Aufbringen einer ersten Bahn (144) aus der Reaktionsmischung auf den Boden;
- bevor sich der Schaum der ersten Bahn verfestigt hat, Aufbringen einer zweiten Bahn (146) aus der Reaktionsmischung (128) auf den Boden, so dass ein Seitenrand der zweiten Bahn einen Seitenrand der ersten Bahn berührt.

18. Verfahren nach einem der vorangehenden Ansprüche, wobei die Reaktionsmischung durch ein Vehikel (100) oder eine Vorrichtung (101), die von einem Anwender (102) getragen wird, auf den Boden aufgebracht wird, wobei das Verfahren ferner umfasst:
- automatisch Bestimmen der Position und/oder der Geschwindigkeit des Vehikels oder der Vorrichtung, das bzw. die zum Aufbringen der Reaktionsmischung auf den Boden verwendet wird; und
- automatisch Anpassen der Art und/oder der Menge reaktiver Komponenten, die miteinander vermischt werden, um die Reaktionsmischung zu erzeugen, abhängig von der Position und der Geschwindigkeit des Vehikels oder des Anwenders (102), der die Vorrichtung trägt.

19. Verfahren nach einem der vorstehenden Ansprüche, ferner umfassend: Auftragen einer Versiegelungsbeschichtung (127), nachdem sich der aufgetragene Polyurethanschaum verfestigt hat oder ausgehärtet ist, wobei die Versiegelungsbeschichtung vorzugsweise mehrere Bahnen (144, 146, 148) des Poylurethanbodens bedeckt, wodurch etwaige Arbeitsschritte zum Miteinanderverkleben benachbarter Bahnen entfallen.

20. System zum Herstellen eines Polyurethanbodenbelags (128) für einen Sportplatz (136), wobei das System umfasst:
- eine A-Komponente (902), bei der es sich um eine Polyolmischung handelt;
- eine B-Komponente (904), bei der es sich um eine Isocyanatmischung handelt, die umfasst:
∘ 2,2'-Methylendiphenyldiisocyanat (922);
∘ Diphenylmethan-2,4'-diisocyanat (924);
∘ Diphenylmethan-4,4'-diisocyanat (926); und
∘ Isocyanat-Prepolymer (932);
- Wasser (914), wobei das Wasser und die B-Komponente in unterschiedlichen Behältern vorgehalten werden;
- einen Mischer zum Mischen (504) der A-Komponente, der B-Komponente und des Wassers zur Erzeugung einer flüssigen Polyurethan-Reaktionsmischung; und
- eine Düse (124), die mit dem Mischer gekoppelt ist, zum Aufbringen (506) der Polyurethan-Reaktionsmischung (128) auf einen Boden (103) des Sportplatzes, bevor chemische Reaktionen in der Reaktionsmischung einen festen Polyurethanschaum gebildet haben, wobei der Polyurethanschaum nach seiner Verfestigung als der Polyurethanbodenbelag dient.

21. Tragbare Vorrichtung (101), das System nach Anspruch 20 umfassend.

22. Vehikel (100), das System nach Anspruch 20 umfassend.

23. Polyurethanbodenbelag (129) eines Sportplatzes (136), hergestellt anhand eines Verfahrens gemäß einem der vorangehenden Ansprüche 1-19.

## Revendications

1. Procédé de production d'un revêtement de sol en polyuréthane (129) pour un terrain de sports (136), le procédé comprenant :
- la fourniture (502) de composants réactifs pour la production de polyuréthane, les composants réactifs étant composés d'un composant A (902) étant un mélange de polyol et un composant B (904) étant un mélange d'isocyanates, et d'eau (914), le composant B comprenant :
° du 2,2' méthylène diphényl diisocyanate (922) ;
° du diphényl méthane-4,4'-diisocyanate (926) ; et
° un prépolymère d'isocyanate (932) ;
- le mélange (504) des composants réactifs pour générer un mélange réactionnel de polyuréthane liquide (129) ;
- l'application (506) du mélange réactionnel de polyuréthane (128) sur le sol (103) d'un terrain de sports avant que les réactions chimiques dans le mélange réactionnel n'aient généré une mousse de polyuréthane solide, la mousse de polyuréthane étant prévue pour être utilisée en tant que revêtement de sol en polyuréthane après sa solidification.

2. Procédé selon la revendication 1, comprenant en outre un ajout de di-n-octylin néodécanoate en tant que catalyseur pour catalyser une réaction de poly addition du polyol et du composant B pour constituer le mélange réactionnel, la quantité de catalyseur étant dans la plage de 0,0008 % à 0,0011 % en poids d'une combinaison du composant A et de l'eau, la quantité d'eau et la quantité de 2,2'-méthylène diphényl diisocyanate (922) étant choisies de sorte qu'une heure après le mélange des composants réactifs, plus de 60 % de l'eau a réagi pour former du CO₂ et plus de 50 % des groupes NCO du composant B ont réagi avec les groupes hydroxyles du polyol du composant B pour constituer la mousse de polyuréthane solide.

3. Procédé selon l'une quelconque des revendications précédentes, l'eau (914) étant ajoutée dans une quantité de 0,1 à 1,5 % en poids du composant A, en particulier, dans une quantité de 0,4 à 0,6 % en poids du composant A.

4. Procédé selon l'une quelconque des revendications précédentes, l'eau (914) étant ajoutée au mélange réactionnel en tant que constituant du composant A.

5. Procédé selon l'une quelconque des revendications précédentes, l'eau (914) étant ajoutée au mélange réactionnel et/ou au composant A sous une forme libre, non liée à une zéolithe.

6. Procédé selon l'une quelconque des revendications précédentes, comprenant en outre :
- l'addition d'un matériau de tamis moléculaire au composant A pour adsorber et enlever toute humidité du composant A ;
- éventuellement, si de l'eau (914) est ajoutée au mélange réactionnel en tant que constituant du composant A, une addition d'eau (914) lorsque l'humidité a été enlevée du composant A.

7. Procédé selon la revendication 6 le matériau de tamis moléculaire étant une première zéolithe.

8. Procédé selon l'une quelconque des revendications précédentes, le composant B (904) comprenant un mélange de monomères (922 à 926) et de polymères (928, 932) comprenant respectivement un ou plusieurs groupes NCO, le polyol (906) du composant A comprenant un ou plusieurs groupes OH, les groupes NCO dans le composant B et les groupes OH dans le polyol du composant A ayant un rapport molaire NCO/OH dans la plage de 1,14 : 1 à 1,18 : 1, en particulier dans la plage de 1,15 : 1 à 1,17 : 1.

9. Procédé selon l'une quelconque des revendications précédentes, comprenant en outre :
- l'addition d'une seconde zéolithe au mélange réactionnel, la seconde zéolithe étant saponifiée avec de l'eau et étant appropriée pour désorber au moins 20 % de l'eau du mélange réactionnel pendant 60 minutes après la création du mélange réactionnel.

10. Procédé selon la revendication 9, comprenant en outre :
- la détection d'une température du sol (103) du terrain de sports ;
où la quantité de la seconde zéolithe dépend de la température ambiante mesurée, où, plus la température est élevée, plus la quantité de seconde zéolithe avec son eau adsorbée qui est ajoutée au mélange réactionnel est élevée.

11. Procédé selon l'une quelconque des revendications précédentes, comprenant en outre la génération du composant B en :
- créant un prémélange de MDI (940) comprenant :
∘ du 2,2' méthylène diphényl diisocyanate (922) dans une quantité de 0,3 % à 7 % en poids du prémélange de MDI ;
∘ du diphénylméthane-2,4'-diisocynate (924) dans une quantité de 10 % à 35 % en poids du prémélange de MDI ;
∘ du diphénylméthane-4,4'-diisocynate (926) dans une quantité de 10 % à 45 % en poids du prémélange ; et
∘ des polymères de MDI (930) constitués de deux ou plus desdits monomères de diisocynate (922, 924, 926) dans une quantité de 0 % à 30 % en poids de prémélange de MDI ;
- mélangeant le prémélange de MDI (940) et un polyol de prémélange (930) pour permettre aux composants de prémélange de MDI et au polyol de prémélange (930) de générer le composant B, le composant B comprenant :
∘ un prépolymère isocynate aromatique (932) ; et
∘ des produits de départ du prémélange n'ayant pas réagi et le polyol de prémélange.

12. Procédé selon l'une quelconque des revendications précédentes, la teneur en NCO du composant B étant entre 1,5 % et 18 % en poids du composant B.

13. Procédé selon la revendication 12, la teneur en NCO du composant B étant entre 9 % et 14 %, par exemple, 10 % en poids du composant B.

14. Procédé selon l'une quelconque des revendications précédentes, comprenant en outre :
l'utilisation d'un prémélange de MDI (940), le prémélange comprenant un mélange de monomères d'isocyanate (922 à 926) pour générer le prépolymère d'isocyanate (932), le prémélange de MDI comprenant le 2,2' méthylène diphényl diisocyanate (922) dans une quantité de 0,3 à 7 % en poids du prémélange de MDI.

15. Procédé selon l'une quelconque des revendications précédentes, dans lequel le polyol (906) du composant A a une viscosité de 2500 à 3500 mPas à 25 °C.

16. Procédé selon l'une quelconque des revendications précédentes, dans lequel le sol est fabriqué en béton, en terre ou en bois et dans lequel le mélange réactionnel est appliqué au sol (103) directement en l'absence d'une couche adhésive.

17. Procédé selon l'une quelconque des revendications précédentes, dans lequel l'application du mélange réactionnel sur le sol (103) comprend :
- l'application d'une première bande (144) du mélange réactionnel sur le sol ;
- avant que la mousse de la première bande ne soit solidifiée, l'application d'une deuxième bande (146) de mélange réactionnel sur le sol de telle manière qu'un bord latéral de la deuxième bande soit en contact avec un bord latéral de la première bande.

18. Procédé selon l'une quelconque des revendications précédentes, dans lequel le mélange réactionnel est appliqué sur le sol par un véhicule (100) ou par un appareillage (101) transporté par un utilisateur (102), le procédé comprenant en outre :
- la détermination de manière automatique de la position et/ou de la vitesse du véhicule ou de l'appareillage utilisé pour appliquer le mélange réactionnel sur le sol ; et
- l'ajustement de manière automatique du type et/ou de la quantité de composants réactifs mélangés pour générer le mélange réactionnel en fonction de la position et de la vitesse du véhicule ou de l'utilisateur (102) transportant l'appareillage.

19. Procédé selon l'une quelconque des revendications précédentes, comprenant en outre :
l'application, après que la mousse de polyuréthane appliquée se soit solidifiée ou ait durci, d'un revêtement de nivellement (127), le revêtement de nivellement recouvrant préférentiellement les multiples bandes (144, 146, 148) du sol en polyuréthane, escamotant ainsi tout traitement pour coller des bandes adjacentes les unes aux autres.

20. Système pour produire un revêtement de sol en polyuréthane (128) pour un terrain de sports (136), le système comprenant :
- un composant A (902) étant un polyol de mélange ;
- un composant B (904) étant un mélange d'isocyanates et comprenant :
∘ du 2,2' méthylène diphényl diisocyanate (922) ;
∘ du diphényl méthane-4,4'-diisocyanate (926) ; et
∘ un prépolymère d'isocyanate (932) ;
- de l'eau (914), l'eau et le composant B étant stockés dans des conteneurs différents ;
- un dispositif mélangeur pour mélanger (504) le composant A, le composant B et l'eau afin de générer un mélange réactionnel de polyuréthane liquide ; et
- un embout (124), couplé au dispositif mélangeur, pour appliquer (506) le mélange réactionnel de polyuréthane (128) sur le sol (103) du terrain de sports avant que des réactions chimiques dans le mélange réactionnel n'aient généré une mousse de polyuréthane solide, la mousse de polyuréthane après sa solidification devant être utilisée en tant que revêtement de sol en polyuréthane.

21. Appareillage portatif (101) comprenant le système selon la revendication 20.

22. Véhicule (100) comprenant le système selon la revendication 20.

23. Revêtement de sol en polyuréthane (129) d'un terrain de sports (136) fabriqué par un procédé selon l'une quelconque des revendications précédentes 1 à 19.
